# EUROPÄISCHE PATENTSCHRIFT

(11) **EP 4 327 066 B1**
(45) Veröffentlichungstag und Bekanntmachung des Hinweises auf die Patenterteilung: **25.03.2026**
(21) Anmeldenummer: 22724005.8
(22) Anmeldetag: 20.04.2022
(51) Int. Cl.: G01M 17/007, G01M 99/00, G06F 30/20, G01M 13/00, G05B 23/02, G06F 30/27, G06F 30/36, G06F 119/02, G06F 119/04, G06F 119/08, G07C 5/08

(54) **VORRICHTUNG UND COMPUTERIMPLEMENTIERTES VERFAHREN, ZUM TESTEN**
DEVICE AND COMPUTER-IMPLEMENTED METHOD, FOR TESTING
DISPOSITIF ET PROCÉDÉ MIS EN OEUVRE PAR ORDINATEUR, PERMETTANT DE RÉALISER UN TEST

(30) Priorität: 20.04.2021 DE 102021109923
(43) Veröffentlichungstag der Anmeldung: 28.02.2024
(73) Patentinhaber: Robert Bosch GmbH, 70442 Stuttgart (DE)
(72) Erfinder: SANDMANN, Kai, 70806 Kornwestheim (DE); LEYENDECKER, Thomas, 70806 Kornwestheim (DE); KUHN, Florian, 70567 Stuttgart (DE); BIRKHOLD, Felix, 71254 Ditzingen (DE); SCHIEGG, Martin, 70825 Korntal-Muenchingen (DE); GERWINN, Sebastian, 71229 Leonberg (DE)
(86) Internationale Anmeldenummer: PCT/EP2022/060328
(87) Internationale Veröffentlichungsnummer: WO 2022/223565

(56) Entgegenhaltungen:
- DE-A1- 102017 106 919
- US-B1- 8 725 456
- S. FOULARD ET AL: "Automotive drivetrain model for transmission damage prediction", MECHATRONICS., vol. 30, 1 September 2015 (2015-09-01), GB, pages 27 - 54, XP055489559, ISSN: 0957-4158, DOI: 10.1016/j.mechatronics.2015.06.008

## Beschreibung

### Hintergrund

Das Testen einer Maschine, welches das Laufenlassen der Maschine beinhaltet, erfordert das Erstellen eines Prototyps und das Durchführen von Tests unter realen Bedingungen, für die viele Ressourcen benötigt werden. Die Dokumente DE 10 2017 106919 A1, US 8 725 456 B1 und S. FOULARD ET AL: "Automotive drivetrain model for transmission damage prediction", MECHATRONICS., Bd. 30, 1. September 2015 ), Seiten 27-54, XP055489559 beschreiben beispielsweise Verfahren zum Testen einer Maschine mit einer Mehrzahl van Komponenten oder zum Testen einer Komponente einer Maschine.

### Offenbarung der Erfindung

Ein computerimplementiertes Verfahren- zum Testen einer Maschine mit einer Mehrzahl von Komponenten oder zum Testen einer Komponente einer Maschine, beinhaltet das Bereitstellen einer Menge von Eingangsgrößen für ein Modell, wobei die Menge von Eingangsgrößen Belastungsfaktoren an der Maschine kennzeichnet oder Belastungsfaktoren an mindestens einer Komponente der Maschine kennzeichnet, das Auswählen einer Teilmenge der Menge, das Mappen - durch das Modell - der Teilmenge auf eine Ausgangsgröße des Modells, die eine Beanspruchung, welche die Belastungsfaktoren bei mindestens einer Komponente der Maschine verursachen, kennzeichnet. Dies ermöglicht, vorzugsweise in einem frühen Entwicklungsstadium, eine wesentlich effizientere Bestimmung der komponentenspezifischen Beanspruchung, und eine Beurteilung auf der Basis von Beanspruchungsverteilungen, die aus einer Mehrzahl, z.B. Zehntausenden, von unterschiedlichen Beanspruchungsszenarien oder Wiederholungen von Tests mit demselben Beanspruchungsszenario abgeleitet werden. Ein Prototyp der Maschine wird nicht benötigt.

Das Verfahren erlaubt vorteilhafterweise eine Ableitung funktionaler Lasten zur Bewertung und Optimierung des Maschinen- bzw. Komponentenverhaltens, insbesondere eine Bewertung und/oder Anpassung/Optimierung einer Betriebsstrategie, beispielsweise zur Optimierung von funktionellen Systemgrößen, wobei die Komponente Teil dieses Systems sein kann, beispielsweise in Bezug auf ein Verbrauchsverhalten.

Bei einem Aspekt ist die Komponente der Maschine beispielsweise eine Brennstoffzellenkomponente, ein Wechselrichter für eine elektrische Maschine, eine Batterie oder ein Getriebe, insbesondere für ein Elektrofahrzeug, ein Kraftstoffeinspritzsystem, insbesondere für ein Hybridfahrzeug. Ferner kann die Komponente eine andere Komponente insbesondere eines Fahrzeugs sein, beispielsweise eine Komponente eines Antriebsstranges, eines Lenksystems, eines Bremssystems oder eines Sicherheitssystems wie zum Beispiel eines Kamera- oder Radarsystems sein.

Bei einem Aspekt ist die Maschine ein Fahrzeug, ein Motorrad oder ein Elektrofahrrad, ein Zug oder ein Flugzeug, oder ein Schiff.

Vorzugsweise erfolgt ein Bestimmen eines Schädigungsgrades, insbesondere eines Ermüdungsgrades der mindestens einen Komponente in Abhängigkeit von einer Menge von Ausgangsgrößen, welche die Ausgangsgröße beinhaltet. Eine solche Beanspruchung bzw. allgemeiner ein Schadensmechanismus kann insbesondere einen Verschleiß, eine Korrosion oder allgemein eine Ermüdung und ein statistisches Versagen umfassen. Unter einem Schädigungsgrad ist insbesondere ein durch eine Beanspruchung bzw. durch einen Schadensmechanismus verursachtes Ausmaß an Schaden, insbesondere mit nachteiliger Auswirkung auf die Funktionalität, an der Komponente bzw. der Maschine zu verstehen.

Erfindungsgemäß beinhaltet das Auswählen der Teilmenge das Auswählen einer Eingangsgröße, die eine Route definiert, und das Auswählen einer Eingangsgröße, die ein Fahrerprofil definiert, und wobei die Eingangsgröße, welche die Route definiert, aus einer Mehrzahl von Eingangsgrößen, die unterschiedliche Routen definieren, ausgewählt wird, wobei die Eingangsgröße, welche das Fahrerprofil definiert, aus einer Mehrzahl von Eingangsgrößen, die unterschiedliche Fahrerprofile definieren, ausgewählt wird. Dies ermöglicht die Simulation einer großen Anzahl von unterschiedlichen Fahrzyklen zum Ermitteln von Beanspruchung und Belastung anstelle einer Vielzahl von realen Testfahrten.

Vorzugsweise wird eine Mehrzahl verschiedener Teilmengen ausgewählt und gemappt, wobei eine Verteilung der Beanspruchung oder Ermüdung aus den Ausgangsgrößen, die aus dem Mappen der unterschiedlichen Teilmengen resultieren, bestimmt wird. Hierdurch werden Variationen bereitgestellt, welche die Fähigkeit verbessern, Kombinationen von Eingangsgrößen zu identifizieren, die eine höhere Ermüdung als andere oder eine bestimmte Klasse von Ermüdung verursachen.

Vorzugsweise beinhaltet das Verfahren, insbesondere das Bestimmen des Schädigungsgrades, das Addieren oder Multiplizieren aus der Menge der Ausgangsgrößen ausgewählter Ausgangsgrößen. Damit wird für die ausgewählten Ausgangsgrößen eine konsolidierte Schädigung der Ausgangsgrößen bereitgestellt.

Vorzugsweise beinhaltet das Verfahren, insbesondere das Bestimmen des Schädigungsgrades, das Bestimmen einer Häufigkeit des Auftretens einer Eigenschaft der Route, insbesondere einer Tageszeit, einer Startzeit, einer Region, einer Dauer, einer Entfernung oder eines Typs, entweder in einer maschinenspezifischen Statistik oder in einem maschinenspezifischen Journal, und das Bestimmen einer Gewichtung für die Ausgangsgröße in Abhängigkeit von der Häufigkeit, sowie das Addieren oder Multiplizieren der mit der Gewichtung gewichteten Ausgangsgröße. Damit wird die konsolidierte Schädigung für eine bestimmte Eigenschaft der Route bereitgestellt.

Vorzugsweise beinhaltet das Verfahren, insbesondere das Bestimmen des Beanspruchungsgrades, das Auswählen eines Bedieners, insbesondere eines Fahrers oder Benutzers der Maschine in der maschinenspezifischen Statistik oder dem maschinenspezifischen Journal, das Bestimmen einer Mehrzahl von Ausgangsgrößen in der Menge der Ausgangsgrößen für den Bediener, und vorzugsweise das Bestimmen des Schädigungsgrades mit der Mehrzahl von Ausgangsgrößen. Damit wird die konsolidierte Schädigung für einen bestimmten Bediener bereitgestellt.

Vorzugsweise beinhaltet das Verfahren, insbesondere das Bestimmen des Schädigungsgrades, das Auswählen der maschinenspezifischen Statistik aus einer Menge von maschinenspezifischen Statistiken. Damit werden maschinenspezifische Gewichtungen bereitgestellt.

Eine Vorrichtung zum Testen einer Maschine mit einer Mehrzahl von Komponenten oder zum Testen einer Komponente einer Maschine ist dazu eingerichtet, die Schritte des Verfahrens entsprechend auszuführen.

Ein Computerprogramm beinhaltet Anweisungen, die bei Ausführung durch einen Computer bewirken, dass der Computer Schritte des Verfahrens entsprechend durchführt.

Weitere vorteilhafte Aspekte der Erfindung ergeben sich aus der nachfolgenden Beschreibung und der Zeichnung. In den Zeichnungen zeigen:
die Fig. 1 schematisch einen Teil einer Vorrichtung 100 zum Testen,
die Fig. 2 schematisch Schritte in einem Verfahren zum Testen,
die Fig. 3 schematisch ein erstes Beispiel,
die Fig. 4 schematisch ein zweites Beispiel.

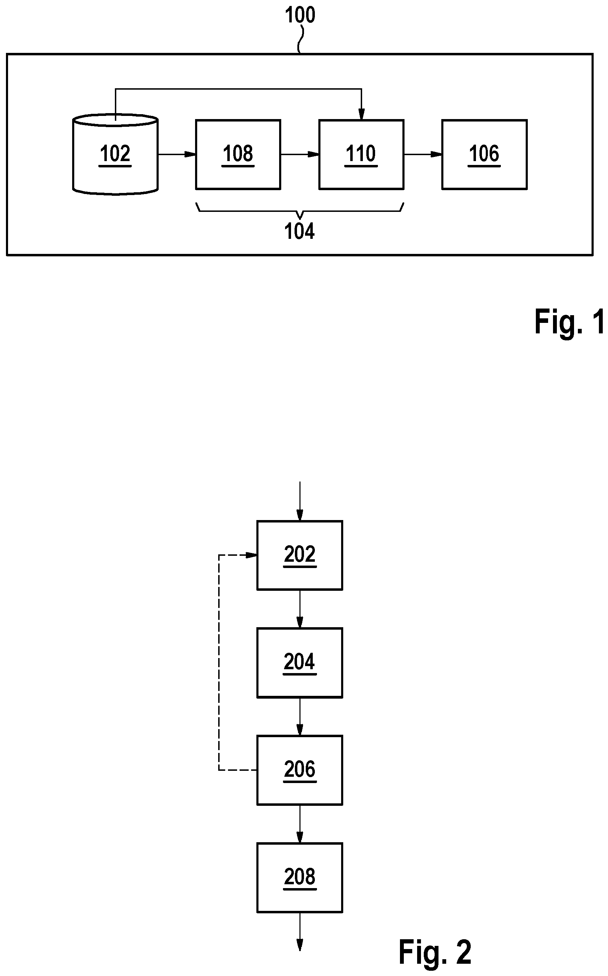

Die Fig. 1 zeigt schematisch einen Teil einer Vorrichtung 100 zum Testen. Die Vorrichtung 100 ist zum Testen einer Maschine mit einer Mehrzahl von Komponenten oder zum Testen einer Komponente einer Maschine eingerichtet oder einrichtbar.

Die Vorrichtung 100 beinhaltet eine Datenbank 102, ein Modell 104 und einen Analysator 106.

Die Datenbank 102 beinhaltet eine Menge von Eingangsgrößen für das Modell 104. Eingangsgrößen kennzeichnen Belastungsfaktoren an der Maschine oder Belastungsfaktoren an mindestens einer Komponente der Maschine. Die Datenbank 102 beinhaltet eine Mehrzahl von Eingangsgrößen, die unterschiedliche Routen und unterschiedliche Fahrerprofile definieren. Die Datenbank 102 kann Eingangsgrößen umfassen, die unterschiedliche Umgebungsbedingungen definieren.

Die Eingangsgrößen des Modells 104, die eine Route definieren, definieren beispielsweise einen Start der Route und ein Ende der Route und/oder einen Verlauf der Route.

Die Route kann durch geografische Koordinaten für reale Routen oder Telemetriedaten aus realen Fahrten definiert werden. Die Route kann aus einem Fahrtenbuch ausgewählt werden. Die Route kann durch synthetisch erzeugte Daten definiert werden, die geografische Koordinaten oder Telemetriedaten darstellen, die nicht aus realen Routen stammen.

Die Eingangsgrößen des Modells, die ein Fahrerprofil definieren, definieren beispielsweise eine Frequenz und/oder einen Modus der Betätigung der Drossel- und/oder Bremssteuerung. Vorzugsweise sind ferner weitere Informationen über eine generelle Fahrweise, insbesondere tolerierte Geschwindigkeiten und ein Grad an Gleichmäßigkeit eines Fahrstils, im Modell abgebildet.

Die Eingangsgrößen des Modells, die eine Umgebungsbedingung definieren, definieren vorzugsweise klimatische, geografische, verkehrsbedingte und/oder gesetzliche Umgebungsbedingungen, beispielsweise mindestens eines von einer Temperatur, einer Windgeschwindigkeit, einer Windrichtung, einer Geschwindigkeitsbegrenzung, einer Position einer Geschwindigkeitsbegrenzung, einer Position eines Fahrzeugs und einer Position eines Verkehrsstaus.

Als Eingangsgrößen des Modells 104 können auch charakteristische Kenngrößen der zu testenden Maschine oder einer Komponente derselben ausgewählt werden. Eine Kenngröße der Maschine oder der Komponente derselben kann aus einem für diese Kenngröße definierten Bereich ausgewählt werden. Diese Kenngrößen können definieren, wie das Modell 104 eine Eingangsgröße oder Eingangsgrößen auf eine Ausgangsgröße oder auf Ausgangsgrößen mappt. Das Modell 104 kann Teile beinhalten, die eine Eingangsgröße oder Eingangsgrößen auf eine Ausgangsgröße oder auf Ausgangsgrößen mappen. Das Modell 104 kann mindestens einen Teil beinhalten, um eine Eingangsgröße oder Eingangsgrößen auf eine Zwischengröße oder Zwischengrößen zu mappen. Das Modell 104 kann mindestens einen Teil beinhalten, um eine Zwischengröße auf eine Ausgangsgröße oder auf Ausgangsgrößen zu mappen. Das Modell 104 kann mindestens einen Teil beinhalten, um Zwischengrößen auf eine Ausgangsgröße oder auf Ausgangsgrößen zu mappen. Der mindestens eine Teil kann dazu eingerichtet sein, durch mindestens eine der folgenden Operationen zu mappen: eine Funktion, eine Schätzung, eine Finite-Elemente-Simulation, eine Kennlinie oder eine Tabelle. Diese Liste ist für Operationen beispielhaft und nicht erschöpfend.

Das Modell 104 ist dazu eingerichtet, eine Teilmenge der Menge von Eingangsgrößen auf eine Menge von Ausgangsgrößen des Modells 104 zu mappen, die eine Beanspruchung kennzeichnet, welche die Belastungsfaktoren bei mindestens einer Komponente der Maschine verursachen. In dem Beispiel beinhaltet das Modell 104 einen ersten Teil 108 und einen zweiten Teil 110. Der erste Teil 108 ist zur Simulation globaler Belastungsgrößen eingerichtet. Die Teilmenge der Menge von Eingangsgrößen wird durch den ersten Teil 108 auf globale Belastungsgrößen gemappt, die als Eingabe an den zweiten Teil 110 übergeben werden. Der zweite Teil 110 ist zur Systemsimulation eingerichtet. Der zweite Teil 110 ist dazu eingerichtet, die Eingabe von dem ersten Teil 108 auf die Menge von Ausgangsgrößen zu mappen. Ein zusätzlicher Eingang in den zweiten Teil 110 können lokale Belastungsgrößen sein. Die lokalen Belastungsgrößen und der Eingang aus dem ersten Teil 108 werden bei diesem Aspekt auf die Ausgangsgrößen gemappt.

Der erste Teil 108 kann beispielsweise dazu eingerichtet sein, die Maschine oder deren Komponente zu simulieren. Der zweite Teil 110 kann in diesem Beispiel dazu eingerichtet sein, eine Beanspruchung der Maschine oder der Komponente derselben zu simulieren.

Eine nicht erschöpfende Liste von Beispielen für globale Belastungsgrößen ist: Geschwindigkeit, Beschleunigung, Gang. Eine nicht erschöpfende Liste von Beispielen für Komponenten ist ein Antriebsstrang eines Fahrzeugs. Eine nicht erschöpfende Liste von Beispielen für lokale Belastungsgrößen ist die Motorleistung oder der Druck in einem Einspritzsystem.

Die globale Belastungsgröße für die Geschwindigkeit eines Fahrzeugs auf einer Route wird beispielsweise durch den ersten Teil 108 simuliert, durch Abtastung einer Eingangsgröße aus der Datenbank, die Routendaten, z.B. Telemetriedaten für die Route, definiert, durch Bestimmen eines Fahrerverhaltens auf der Route mit einem Fahrermodell, das gemäß den aus der Datenbank abgetasteten Eingangsgrößen parametrisiert wird, durch Bestimmen eines Fahrwiderstands auf der Route mit einem physikalischen Modell, das gemäß den Routendaten und vorzugsweise fahrzeugspezifischen Daten parametrisiert wird, durch Bestimmen einer Toleranz mit einem stochastischen Modell von Toleranzen, das gemäß dem Fahrerverhalten parametrisiert wird, und aus der Datenbank abgetasteten Eingangsgrößen, die den Verkehr repräsentieren, und durch Bestimmen der Geschwindigkeit mit einem datengetriebenen Modell zum Erzeugen einer Geschwindigkeitskurve auf der Route in Abhängigkeit von dem Ausgang der anderen Modelle.

Die Menge von Ausgangsgrößen für die Geschwindigkeitskurve wird durch den zweiten Teil 110 beispielsweise mit einem Simulationsmodell simuliert, das bei Anlegen der Geschwindigkeitskurve die Belastung von Komponenten eines Antriebsstrangs des Fahrzeugs bestimmt. In dem Beispiel sind die Routendaten, insbesondere Telemetriedaten, die eine Steigungskurve der Route angeben, ein zusätzlicher Eingang für den zweiten Teil 110. Die Geschwindigkeitskurve und die Steigungskurve sind in diesem Beispiel ausgerichtet. In dem Beispiel bestimmt das Simulationsmodell die Beschleunigung aus der Geschwindigkeitskurve und eine Beanspruchung des Antriebsstrangs in Abhängigkeit von der Geschwindigkeit, der Beschleunigung und der Steigung der Route. In einem Beispiel werden in Abhängigkeit von der Geschwindigkeit, der Beschleunigung und der Steigung aus einem Rückwärtsmodell des Antriebsstrangs ein Motordrehmoment, eine Motorumdrehung pro Minute und/oder eine Motorleistung ermittelt.

Der Analysator 106 ist dazu eingerichtet, in Abhängigkeit von der Menge der Ausgangsgrößen einen Ermüdungsgrad der mindestens einen Komponente zu bestimmen.

Der Analysator 106 kann dazu eingerichtet sein, einen zeitlichen Verlauf der Beanspruchung zu bestimmen.

Der Analysator 106 kann dazu eingerichtet sein, eine Verteilung der Beanspruchung über eine Variation von Eingängen in das Modell 104 zu bestimmen. Der Analysator 106 kann dazu eingerichtet sein, eine Verteilung von Verläufen der Beanspruchung über die Variation von Eingängen zu bestimmen.

Der Analysator 106 ist dazu eingerichtet, die Schädigung, insbesondere Ermüdung, der Maschine oder der Komponente derselben aus der Verteilung oder dem zeitlichen Verlauf der Beanspruchung zu bestimmen. Der Analysator 106 ist dazu eingerichtet, die Schädigung insbesondere Ermüdung basierend auf einer Zählung, z.B. einer Rainflow-Zählung, einer linearen Schädigungsakkumulation, einer Analyse der Hochzyklus-Schädigung, insbesondere Hochzyklus-Ermüdung, oder der Niedrigzyklus-Schädigung, insbesondere Niedrigzyklus-Ermüdung zu bestimmen. Wie oben ausgeführt, kann eine solche Beanspruchung insbesondere einen Verschleiß, eine Korrosion oder allgemein eine Ermüdung und ein statistisches Versagen umfassen.

In einem Beispiel resultiert die Verteilung aus einer Variation des Fahrerverhaltens und der Routen. Zusätzlich kann die Verteilung für eine Variation von Einsatzfällen der Maschine bestimmt werden. Eine nicht erschöpfende Liste von Beispielen für Schädigung, insbesondere Ermüdung, ist die Schädigung, insbesondere Ermüdung, der Komponente, die durch Druckänderungen in dem Kraftstoffeinspritzsystem des Motors verursacht wird.

Der Analysator 106 kann dazu eingerichtet sein, Kombinationen von Eingangsgrößen zu bestimmen, die eine höhere Schädigung, insbesondere Ermüdung, verursachen als andere Kombinationen. Kritische Kombinationen werden beispielsweise durch Detektieren einer Verteilung bestimmt, die im Vergleich zu anderen Verteilungen, die aus Variationen resultieren, in einem vorgegebenen Perzentil liegt.

Der Analysator 106 kann dazu eingerichtet sein, eine Kombination von Eingangsgrößen zu bestimmen, die für eine Ermüdungsklasse charakteristisch sind.

Das Ergebnis der Analyse kann verwendet werden, um weitere reale Messungen zu definieren.

Die Vorrichtung 100 ist zum Auswählen der Teilmenge eingerichtet. Die Vorrichtung 100 ist eingerichtet zum Auswählen einer Eingabegröße, die eine Route definiert, einer Eingabegröße, die ein Fahrerprofil definiert und einer Eingabegröße, die mindestens eine Umgebungsbedingung für die Teilmenge definiert. Die Vorrichtung 100 ist zum Bereitstellen der Teilmenge an das Modell 104 und zum Bereitstellen des aus dem Eingang resultierenden Ausgangs an den Analysator 106 eingerichtet. Die Vorrichtung 100 kann dazu eingerichtet sein, die Schädigung, insbesondere Ermüdung auszugeben. Die Vorrichtung 100 ist beispielsweise dazu eingerichtet, eine Mehrzahl von verschiedenen zu mappenden Teilmengen auszuwählen und eine Verteilung der Beanspruchung oder Schädigung, insbesondere Ermüdung zu bestimmen, die aus den Ausgangsgrößen, die aus dem Mappen der verschiedenen Teilmengen resultieren, bestimmt wird.

Die Vorrichtung 100 kann mindestens einen Prozessor beinhalten, um die Datenbank 102, das Modell 104, den Analysator 106 und einen Ausgang für die Verteilung entsprechend zu betreiben.

Die Vorrichtung 100 ist dazu eingerichtet, die Schritte des Verfahrens, das nachfolgend unter Bezugnahme auf die Fig. 2 beschrieben wird, auszuführen. Das Modell 104 kann zumindest teilweise ein künstliches neuronales Netz sein. Der Analysator 106 kann zumindest teilweise ein Klassifikator sein. Der Klassifikator kann ein künstliches neuronales Netz sein oder ein solches beinhalten.

Die künstlichen neuronalen Netze können zum Modellieren der Maschine oder einer Komponente derselben vortrainiert werden.

Das Verfahren ist computerimplementiert. Das Verfahren kann zumindest teilweise, zumindest zum Bestimmen des Ausgangs des Modells 104 oder des Analysators 106, von dedizierter Hardware ausgeführt werden.

Das Verfahren wird zum Testen einer Maschine mit einer Mehrzahl von Komponenten oder zum Testen einer Komponente einer Maschine ausgeführt. Das Modell 104 und der Analysator 106 sind dazu eingerichtet, die Maschine oder eine Komponente derselben zu modellieren und zu analysieren. Das Modell 104 kennzeichnet Belastungsfaktoren an der Maschine oder Belastungsfaktoren an mindestens einer Komponente der Maschine.

In einem Schritt 202 wird eine Menge von Eingangsgrößen für das Modell 104 bereitgestellt.

In einem Schritt 204 wird eine Teilmenge der Menge ausgewählt. Das Auswählen der Teilmenge beinhaltet das Auswählen einer Eingangsgröße, die eine Route definiert, eine Eingangsgröße, die ein Fahrerprofil definiert und das Auswählen einer Eingangsgröße, die mindestens eine Umgebungsbedingung definiert.

Die Eingangsgröße, welche die Route definiert, wird aus einer Mehrzahl von Eingangsgrößen, die unterschiedliche Routen definieren, ausgewählt.

Die Eingangsgröße, welche das Fahrerprofil definiert, wird aus einer Mehrzahl von Eingangsgrößen, die unterschiedliche Fahrerprofile definieren, ausgewählt.

Die Eingangsgröße, welche die mindestens eine Umgebungsbedingung definiert, wird ausgewählt aus einer Mehrzahl von Eingangsgrößen, die unterschiedliche Umgebungsbedingungen definieren.

Die mindestens eine Umgebungsbedingung kann in Abhängigkeit von einer Zeitangabe, insbesondere einer Jahreszeit, einer Tageszeit, einem Tag des Jahres oder einem Wochentag, ausgewählt werden.

In einem Schritt 206 wird durch das Modell die Teilmenge auf eine Ausgangsgröße des Modells, die eine Beanspruchung kennzeichnet, welche die Belastungsfaktoren bei mindestens einer Komponente der Maschine verursachen, gemappt. Unterschiedliche Teilmengen werden von dem Modell auf unterschiedliche Ausgangsgrößen gemappt. Eine Menge von Ausgangsgrößen des Modells beinhaltet eine Mehrzahl von Ausgangsgrößen, die eine Beanspruchung kennzeichnen, welche die Belastungsfaktoren in unterschiedlichen Szenarien bei mindestens einer Komponente der Maschine verursachen.

In einem Beispiel beinhaltet die Menge von Ausgangsgrößen für unterschiedliche Bediener der Maschine unterschiedliche Ausgangsgrößen, die unterschiedlichen Eigenschaften eines Betriebs der Maschine zugeordnet sind.

Der Bediener kann ein Fahrer oder Benutzer der Maschine sein.

In einem Beispiel beinhaltet die Menge der Ausgangsgrößen für n verschiedene Bediener und o verschiedene Eigenschaften ein Mapping auf verschiedene Ermüdungsgrade D:

| | | |
|---|---|---|
| | Eigenschaft 1, | ..., Eigenschaft o |
| Bediener 1: | D11, | ..., D10 |
| ... | | |
| Bediener n: | Dn1, | ..., Dno |

Beispielhafte Eigenschaften eines Fahrzeugs sind Straßentypen: "Stadt", "Land", "Autobahn".

Beispiele für Eigenschaften einer Fahrzeugfahrtcharakteristik sind: "Dauer", "Entfernung einer Fahrt".

Die Datenbank 102 kann ein Mapping der Eigenschaften auf die Mehrzahl von Eingangsgrößen, die unterschiedliche Routen oder unterschiedliche Fahrerprofile definieren, beinhalten. Die Eigenschaften können aus Metadaten verfügbar sein, die den Eingangsgrößen zugeordnet sind.

Telemetriedaten können einen zeitlichen Verlauf der Eingangsgröße definieren.

In einem Beispiel beinhaltet die Menge von Ausgangsgrößen für n verschiedene Bediener ein Mapping auf einen Gesamtermüdungsgrad D:

| | |
|---|---|
| Bediener 1: | D1 |
| ... | |
| Bediener n: | Dn |

In einem Schritt 208 wird ein Ermüdungsgrad der mindestens einen Komponente in Abhängigkeit von der Menge der Ausgangsgrößen bestimmt.

In einem Beispiel werden ausgewählte Ausgangsgrößen in der Menge der Ausgangsgrößen addiert. Anstatt die Ausgangsgrößen zu addieren, können die Ausgangsgrößen auch multipliziert werden.

In einem Beispiel wird eine gewichtete Summe oder ein gewichtetes Produkt ausgewählter Ausgangsgrößen in der Menge der Ausgangsgrößen bestimmt.

Die Gewichtung kann aus einer maschinenspezifischen Statistik oder einem maschinenspezifischen Journal bestimmt werden.

Die maschinenspezifische Statistik kann ein Mapping einer Maschine auf eine Aufteilung verschiedener Eigenschaften des Betriebs beinhalten. Eine Menge von maschinenspezifischen Statistiken kann einzelne Aufteilungen für verschiedene Maschinen beinhalten. Die Menge von Maschinenstatistiken für m Maschinen und o Eigenschaften kann eine Aufteilung S pro Maschine beinhalten, die sich auf bis zu 100% pro Maschine summiert:

| | | |
|---|---|---|
| | Eigenschaft 1, | ..., Eigenschaft o |
| Maschine 1: | S11, | ..., S1o |
| ... | | |
| Maschine m: | Sn1, | ..., Sno |

Das maschinenspezifische Journal kann eine Mehrzahl von Mappings eines Bedieners zu der Eigenschaft des Betriebs beinhalten. Das maschinenspezifische Journal kann ein Fahrtentagebuch sein, in dem verschiedene Bediener auf die Eigenschaft jeweiliger Betriebe gemappt sind.

Das Fahrtentagebuch für n Bediener, m Fahrten und o Typen von Eigenschaften kann die folgenden Eigenschaften P beinhalten:

| | | |
|---|---|---|
| | Eigenschaft 1, ..., | Eigenschaft o |
| Bediener 1 - Fahrt 1: | P11, | ..., P10 |
| ... | | |
| Bediener n - Fahrt m: | Pn1, | ..., Pno |

In einem Beispiel wird eine Häufigkeit des Auftretens einer Eigenschaft der Route, insbesondere eine Dauer, eine Entfernung oder ein Typ - entweder in der maschinenspezifischen Statistik oder in dem maschinenspezifischen Journal - bestimmt. Die Häufigkeit des Auftretens kann der Prozentsatz in der Aufteilung sein. Die Gewichtung für die Ausgangsgröße kann in Abhängigkeit von der Frequenz bestimmt werden.

In einem Beispiel wird der Ermüdungsgrad mit einer maschinenspezifischen Statistik bestimmt, die aus der Menge der maschinenspezifischen Statistiken ausgewählt wird. Genauer werden ausgewählte Ausgangsgrößen aus der Menge der Ausgangsgrößen auf einen Gesamt-Ermüdungsgrad D pro Bediener und Maschine gemappt:

| | |
|---|---|
| Bediener 1 - Maschine 1: | D11 |
| ... | |
| Bediener n - Maschine 1: | Dn1 |
| ... | |
| Bediener 1 - Maschine m: | D1m |
| ... | |
| Bediener n - Maschine m: | Dnm |

Bei einem Aspekt des Beispiels werden die Schritte 204 und 206 wiederholt, um eine Mehrzahl von unterschiedlichen Teilmengen auszuwählen und diese individuell auf die Mehrzahl von Mengen von Ausgangsgrößen zu mappen. In einem Beispiel wird eine Verteilung der Beanspruchung oder Ermüdung aus den Ausgangsgrößen, die aus dem Mappen der unterschiedlichen Teilmengen resultieren, bestimmt.

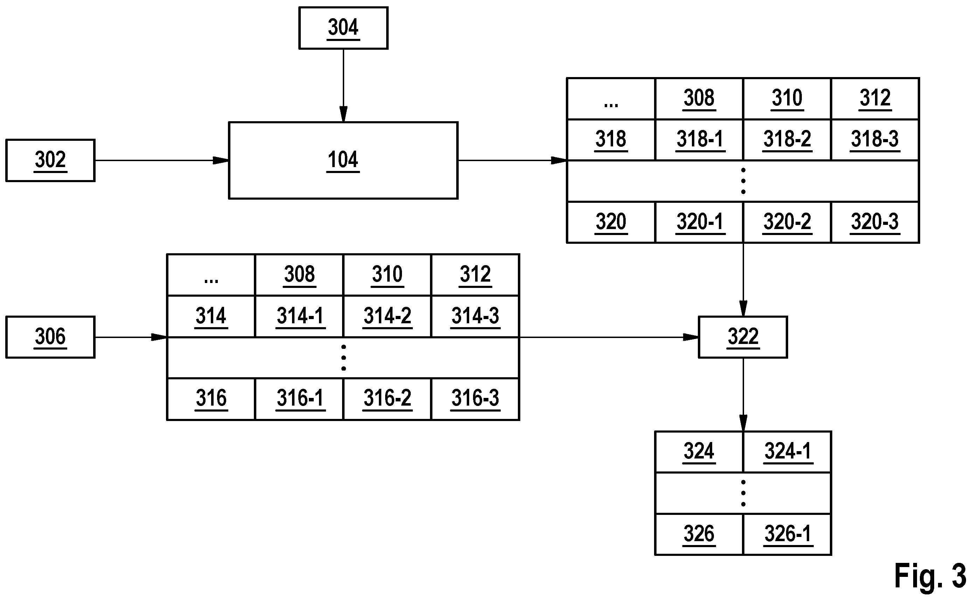

In einem in der Fig. 3 abgebildeten Beispiel beinhaltet die Datenbank 102:
- georeferenzierte Routen von Fahrten in der realen Welt von Ort A nach Ort B
- Mobilitätsstudien einschließlich Fahrtenbüchern
- systematisch erfasste Felddaten, z.B. in einer Fahrzeugflotte insbesondere durch Belastungszähler erfasst,
- hochaufgelöste Telemetriedaten

Aus der Datenbank 102 wird eine erste Eingangsgröße 302, die das Fahrerprofil bereitstellt, ausgewählt.

Aus der Datenbank 102 wird eine zweite Eingangsgröße 304, die den Straßentyp bereitstellt, ausgewählt.

Ein dritter Eingang 306 ist eine Routenaufteilung. In dem Beispiel wird eine straßentypspezifische Aufteilung bereitgestellt.

Das Beispiel verwendet straßentypspezifische Eigenschaften: "Stadt" 308, "Land" 310 und "Autobahn" 312.

Die straßentypspezifische Aufspaltung wird für eine Mehrzahl unterschiedlicher Fahrzeuge bereitgestellt. Die Figur 3 stellt die Aufspaltung für ein erstes Fahrzeug 314 der Mehrzahl von Fahrzeugen und ein letztes Fahrzeug 316 der Mehrzahl von Fahrzeugen dar. Für die verschiedenen Fahrzeuge werden individuelle Aufteilungswerte für die Eigenschaften "Stadt" 308, "Land" 310 und "Autobahn" 312 bestimmt. Die Figur 3 zeigt beispielhaft die Aufteilungswerte 314-1, 314-2, 314-3 für das erste Fahrzeug 314 und die Aufteilungswerte 316-1, 316-2, 316-3 für das letzte Fahrzeug 316.

Der erste Eingang 302 und der zweite Eingang 304 werden mit dem Modell 104 auf straßentypspezifische Ergebnisse für eine Mehrzahl von Fahrerprofilen gemappt. Die Figur 3 zeigt die straßentypspezifischen Ergebnisse 318-1, 318-2, 318-3 für ein erstes Fahrerprofil 318 und die straßentypspezifischen Ergebnisse 320-1, 320-2, 320-3 für das letzte Fahrerprofil 320 der Mehrzahl der Fahrerprofile.

Die straßentypspezifische Aufteilung und die straßentypspezifischen Ergebnisse werden von einer Funktion 322 überlagert. Gemäß einem Beispiel berechnet die Funktion 322 bezogen auf die zurückgelegte Entfernung relative Schädigungswerte für jedes Fahrerprofil. Gemäß einem Beispiel wird nach dem Auswählen einer Fahrerprofil-Fahrzeug-Kombination aus einem Pool verfügbarer Profil-Fahrzeug-Kombinationen eine gewichtete Summe berechnet, indem die relativen, straßentypspezifischen Werte mit dem jeweiligen Straßenanteil multipliziert, aufsummiert und auf ein Auslegungsziel, repräsentiert durch eine Zielentfernung oder Zielbetriebszeit, extrapoliert werden. Die Funktion 322 bestimmt in dem Beispiel somit eine Gesamtschädigung, insbesondere den Ermüdungsgrad, mit einer gewichteten Summe pro Fahrerprofil-Fahrzeug-Kombination für eine Mehrzahl von unterschiedlichen Fahrerprofil-Fahrzeug-Kombinationen. Die Fig. 3 zeigt eine erste Gesamtschädigung 324-1 für eine erste Kombination 324 und eine zweite Gesamtschädigung 326-1 für eine letzte Kombination 326.

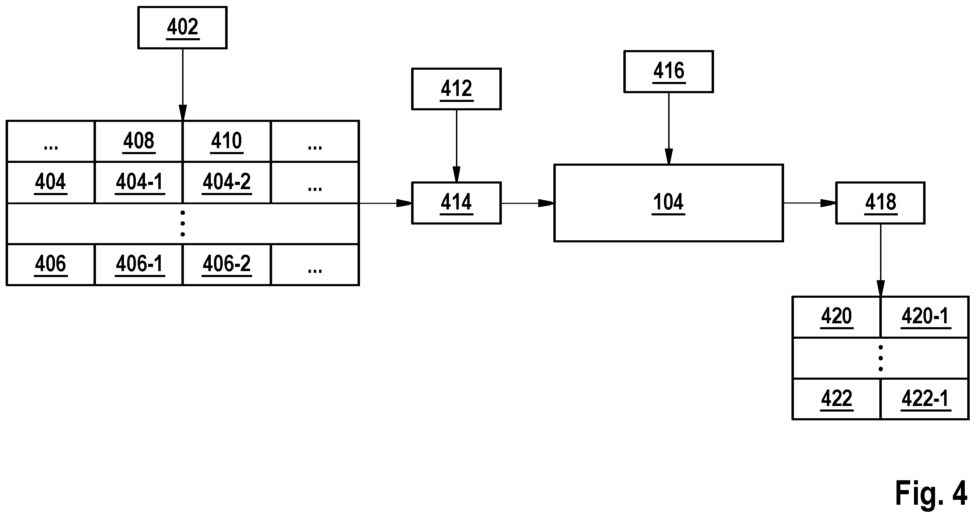

In einem in der Figur 4 dargestellten Beispiel beinhaltet die Datenbank 102 eine Mehrzahl von Fahrtentagebüchern 402, z.B. Fahrerprotokolle.

Die Fahrtentagebücher 402 beinhalten eine Mehrzahl von Benutzer-Fahrt-Kombinationen. Eine erste Benutzer-Fahrt-Kombination 404 und eine letzte Benutzer-Fahrt-Kombination 406 der Mehrzahl von Benutzer-Fahrt-Kombinationen sind in der Figur 4 dargestellt. In dem Beispiel werden die Fahrten durch folgende Eigenschaften identifiziert: Wochentag der Fahrt, Startzeit der Fahrt, Region, in der die Fahrt geographisch liegt, Dauer der Fahrt, Entfernung der Fahrt. Die Figur 4 zeigt schematisch eine erste dieser Eigenschaften 408 und eine zweite dieser Eigenschaften 410. Es können auch andere Eigenschaften definiert werden. Die Figur 4 zeigt eine erste Dauer 404-1 und eine erste Entfernung 404-2 für die erste Benutzer-Fahrt-Kombination 404 und eine zweite Dauer 406-1 und eine zweite Entfernung 406-2 für die letzte Benutzer-Fahrt-Kombination 406.

Die Benutzer-Fahrt-Kombinationen und Georeferenz-Routen 412 aus der Datenbank 102 werden mit einem Linker 414 mit einer ersten Eingangsgröße für das Modell 104 verknüpft.

Der Linker 414 kann Metadaten der Georeferenz-Routen 412 mit den Eigenschaften der Fahrten aus den Benutzer-Fahrten-Kombinationen abgleichen, um als erste Eingangsgröße in die Datenbank 102 potentielle Routen zu finden, die in ihren Metadaten ähnliche Eigenschaften wie eine Fahrt aus dem Fahrtentagebuch 402 aufweisen.

In einer großen Menge von Telemetriedaten kann eine große Anzahl potentieller Routen identifiziert werden. Um die Datenmenge zu reduzieren und eine repräsentative Auswahl aufrechtzuerhalten, können potentielle Routen beispielsweise mit einem k-Means-Clusteralgorithmus verarbeitet werden, um die Routen in Gruppen mit ähnlichen Eigenschaften zu gruppieren. Die erste Eingangsgröße ist in diesem Beispiel ein Zentrum der Gruppe mit ähnlichen Eigenschaften wie die Fahrt.

Aus der Datenbank 102 wird eine zweite Eingangsgröße 416 ausgewählt, die das Fahrerprofil bereitstellt. In dem Beispiel wird pro Fahrtentagebuch ein Fahrerprofil ausgewählt.

Die Ausgangsgrößen des Modells 104 für verschiedene Fahrten desselben Benutzers werden mit einer Funktion 418 überlagert. Gemäß einem Beispiel wird für jeden einzelnen Benutzer die Summe aus Schädigungswerten und Gesamtstrecke und -dauer berechnet. Die Schädigungswerte werden dann auf ein Auslegungsziel extrapoliert, das z.B. durch eine Zieldistanz oder eine Zielbetriebsdauer repräsentiert wird. In dem Beispiel bestimmt die Funktion 418 mit einer Summe der Ausgangsgrößen eine Gesamtschädigung, insbesondere den Ermüdungsgrad. Die Fig. 4 zeigt eine erste Gesamtschädigung 420-1 für einen ersten Benutzer 420 und eine zweite Gesamtschädigung 422-1 für einen letzten Benutzer 422.

Die gezeigten Beispiele beschreiben die Verwendung zum Berechnen einer Schädigungssumme, wobei die Verwendung nicht auf Schädigungssummen beschränkt ist, da stattdessen auch statistische Werte, wie Mittelwerte von Komponentenbelastungen, oder Histogramme oder Lastkollektive verwendet werden können.

Im Folgenden wird anhand weiterer Beispiele beschrieben, wie die Ausgangsgröße insbesondere durch das Modell 104 und den Analysator 106 mit Schädigungsakkumulation bestimmt wird.

### 1) Brennstoffzellenkomponente:

Ein beispielhaftes Konstruktionselement der Brennstoffzellenkomponente ist ein Turbinenrad eines elektrischen Luftkompressors für ein insbesondere mobiles Brennstoffzellensystem. Mobil bedeutet in diesem Zusammenhang, dass die Abmessungen der Brennstoffzelle zum Antrieb eines Personenkraftwagens geeignet sind.

Ein beispielhafter Schädigungsmechanismus ist für die Brennstoffzellenkomponente eine Ermüdung, die auf Zentrifugalkräften beruht.

Das Modell 104 beinhaltet in diesem Aspekt die folgenden Teile:
i. einen Teil, der dazu eingerichtet ist, eine Fahrzeugradleistung basierend auf einer Fahrwiderstandsgleichung als einer Funktion der Fahrzeuggeschwindigkeit, der Steigung, der Fahrzeugmasse, des Widerstandskoeffizienten zu berechnen. Die Eingangsgrößen dieser Gleichung sind beispielsweise der Beschleunigungswiderstand, der Luftwiderstand, der Rollwiderstand, der Steigungswiderstand.
ii. einen Teil, der dazu eingerichtet ist, eine Gleichstromleistung (DC-Leistung) zu berechnen, die erforderlich ist, um eine Wechselstromversorgung (AC-Versorgung) für eine elektrische Maschine zum Antrieb des Fahrzeugs zu erzeugen. Der Wechselstrom wird beispielsweise aus der Fahrzeugradleistung unter Berücksichtigung detaillierter Leistungsverluste im Antriebsstrang, z.B. Getriebeverlust, Differentialverlust, berechnet. Der Gleichstrom wird beispielsweise aus dem Wechselstrom unter Berücksichtigung detaillierter Leistungsverluste in einem Wechselstrom/Gleichstrom-Wechselrichter berechnet.
iii. einen Teil, der dazu eingerichtet ist, basierend auf einer Betriebsstrategie für die Leistungsverzweigung des Fahrzeugs, welche andere Anforderungen, wie maximale Dynamik des Brennstoffzellenstacks, Ladezustand der Batterie, berücksichtigt, eine Leistungsverzweigung von Brennstoffzellenstack und Hochspannungsbatterie aus der Gleichstromleistung zu berechnen.
iv. einen Teil, der dazu eingerichtet ist, einen Stackstrom zu berechnen, der von dem Stack benötigt wird, um die Gleichstromleistung zu liefern. Der Stackstrom wird beispielsweise auf der Grundlage eines detaillierten Stackmodells oder eines Kennlinienmodells berechnet.
v. einen Teil, der dazu eingerichtet ist, aus dem Stackstrom eine Turbinendrehzahl, U/min, zu bestimmen. Dabei ist der Stackstrom eine Referenzgröße der Brennstoffzellenteilsysteme. Optional werden von diesem Teil auch eine Höhe über dem Meeresspiegel, eine Außentemperatur und eine Luftfeuchtigkeit bestimmt.

In dem Beispiel wird eine zeitaufgelöste Turbinendrehzahl, U/min, bestimmt. Diese Turbinendrehzahl wird in ein Schädigungsmodell eingegeben.

Der Analysator 106 beinhaltet das Schädigungsmodell.

Das Schädigungsmodell ist dazu eingerichtet, aus der Turbinendrehzahl eine Zentrifugalkraft abzuleiten.

In dem Beispiel ist das Schädigungsmodell dazu eingerichtet, eine Rainflow-Zählung der zeitaufgelösten Turbinendrehzahl mit einer vorgegebenen Auflösung auszuführen und die Schädigungsakkumulation auf Basis einer Wöhlerkurve zu berechnen.

Die Ausgabe des Schädigungsmodells ist die Ausgangsgröße, welche die Schädigungsakkumulation repräsentiert.

### 2) Wechselrichter für eine elektrische Maschine

Ein beispielhaftes Konstruktionselement des Wechselrichters sind B6-Brücken eines Leistungsmoduls. Der Wechselrichter ist in diesem Beispiel ein elektrischer Luftkompressor für mobile Brennstoffzellensysteme. Mobil bedeutet in diesem Zusammenhang, dass die Abmessungen der Brennstoffzelle zum Antrieb eines Personenkraftwagens geeignet sind. Jeder andere Wechselrichter kann in gleicher Weise getestet werden.

Ein für den Wechselrichter beispielhafter Beschädigungsmechanismus basiert auf thermischer Beanspruchung aufgrund einer hohen Temperaturänderungsgeschwindigkeit.

Das Modell 104 beinhaltet in diesem Aspekt die Teile i), ii), iii), iv) und die Eingangsgrößen, wie oben beschrieben. Das Modell 104 beinhaltet zusätzlich
v. einen Teil, der dazu eingerichtet ist, die Temperatur der B6-Brücken basierend auf dem Stackstrom und einer Spannung an dem Wechselrichter zu berechnen.

In dem Beispiel wird eine zeitaufgelöste Temperatur bestimmt. Diese Temperatur wird in ein Schädigungsmodell eingegeben.

Der Analysator 106 beinhaltet das Schädigungsmodell.

Das Schädigungsmodell ist dazu eingerichtet, eine Rainflow-Zählung der zeitaufgelösten Temperatur mit einer vorgegebenen Auflösung auszuführen und die Schädigungsakkumulation auf Basis einer Wöhlerkurve zu berechnen.

Die Ausgabe des Schädigungsmodells ist die Ausgangsgröße, welche die Schädigungsakkumulation repräsentiert.

### 3) Hochvoltbatterie

Die Hochvoltbatterie beinhaltet in dem Beispiel eine Lithium-Ionen-Batteriezelle. Ein beispielhaftes Konstruktionselement der Hochvoltbatterie ist ein Gehäuse der Zelle.

Ein beispielhafter Schädigungsmechanismus der Hochvoltbatterie ist ein Bruch des Gehäuses durch Aufquellen der Batteriezelle. Wenn eine Batteriezelle geladen wird, dehnt sie sich aus, d.h. sie quillt auf. Dies führt zu einer Belastung in dem Gehäuse. Durch die Belastung im Gehäuse wird die Zelle komprimiert. Der Schädigungsmechanismus für eine Batterie mit einer Mehrzahl von Zellen in diesem kann in gleicher Weise getestet werden.

Das Modell 104 beinhaltet bei diesem Aspekt die Teile i), ii) und die Eingangsgrößen, wie oben beschrieben. Das Modell 104 beinhaltet zusätzlich
iii. Einen Teil, der dazu eingerichtet ist, für die Batterie eine Reihe von Ladezuständen ("state of charge", SOC) basierend auf einer Batteriesteuerung und Begrenzungen in einem Stromkreis an der Batterie zu berechnen.
iv. einen Teil, der dazu eingerichtet ist, aus der SOC-Reihe eine Beanspruchungsreihe berechnet. In dem Beispiel wird eine Beanspruchung in dem Batteriegehäuse in Abhängigkeit von einem Wert der SOC-Reihe in einer Finite-Element-Simulation bestimmt. In dem Beispiel werden die Werte aus der SOC-Reihe in eine Beanspruchungsreihe transformiert.

Der Analysator 106 beinhaltet das Schädigungsmodell.

Das Schädigungsmodell ist dazu eingerichtet, eine Rainflow-Zählung der Belastungszyklen der Batterie auszuführen und die Schädigungsakkumulation auf Basis einer Wöhlerkurve zu berechnen. Die Belastungszyklen können basierend auf der SOC-Reihe gezählt werden, wobei ein Beginn eines ansteigenden SOC einen Beginn eines Belastungszyklus anzeigt.

Die Ausgabe des Schädigungsmodells ist die Ausgangsgröße, welche die Schädigungsakkumulation repräsentiert.

### 4) Getriebe für ein Elektrofahrzeug

In dem Beispiel weist das Getriebe für ein Elektrofahrzeug Zahnräder mit Zähnen auf. Ein beispielhaftes Konstruktionselement des Getriebes ist ein Zahn eines Zahnrades des Getriebes.

Ein beispielhafter Schädigungsmechanismus des Getriebes ist ein Brechen des Zahns, z.B. aufgrund hoher Drehmomente. Ein weiterer beispielhafter Beschädigungsmechanismus des Getriebes ist eine Pittingbildung an einer Flanke des Zahns, z.B. aufgrund eines hohen Drehmoments und einer hohen Anzahl von Umdrehungen pro Minute, U/min.

Das Modell 104 beinhaltet in diesem Aspekt
i. einen Teil, der dazu eingerichtet ist, auf Basis von Fahrzeugeigenschaften, z.B. Masse, Luftwiderstand, Rollwiderstand, auf Basis der Geschwindigkeit und auf Basis eines Steigungsprofils eine Antriebskraftreihe zu berechnen. Die Masse, der Luftwiderstand, der Rollwiderstand, die Geschwindigkeit und das Steigungsprofil sind Eingangsgrößen gemäß diesem Beispiel.
ii. einen Teil, der dazu eingerichtet ist, das Drehmoment an dem Zahn und/oder die Umdrehungen pro Minute basierend auf einem Übersetzungsverhältnis und einem Wirkungsgrad des Getriebes zu berechnen. Das Übersetzungsverhältnis und der Wirkungsgrad sind Eingangsgrößen gemäß diesem Beispiel.

Es können zusätzliche Effekte, die eine mögliche Leistung eines Elektromotors des Elektrofahrzeugs begrenzen, berücksichtigt werden. Dies könnte ein Leistungsverlust des Motors bei hohen Drehzahlen oder ein Schutz vor Überhitzung sein.
iii. einen Teil, der dazu eingerichtet ist, ein Retention-Time-Kennfeld des Elektromotors abzuleiten, z.B. eine Dauer bei bestimmten U/min- und Drehmomentwerten.

Der Analysator 106 beinhaltet das Schädigungsmodell.

Das Schädigungsmodell ist dazu eingerichtet, aus dem Retention-Time-Kennfeld eine Anzahl von Umdrehungen bei bestimmten Drehmomentniveaus zu berechnen. Das Schädigungsmodell ist dazu eingerichtet, die Schädigungsakkumulation für jedes Drehmoment basierend auf einer Wöhlerkurve zu berechnen.

In dem Beispiel sind individuelle Wöhlerkurven für einen Zahnfuß und die Zahnflanke definiert.

Die Ausgabe des Schädigungsmodells ist die Ausgangsgröße, welche die Schädigungsakkumulation repräsentiert.

### 5) Kraftstoffeinspritzsystem in einem Hybridfahrzeug

Ein beispielhaftes Konstruktionselement des Kraftstoffeinspritzsystems ist eine Hochdruckpumpe, ein Kraftstoffrail oder ein Kraftstoffinjektor.

Ein beispielhafter Schädigungsmechanismus des Kraftstoffeinspritzsystems ist eine Schädigung, insbesondere Ermüdung, aufgrund von Änderungen des Kraftstoffdrucks. Änderungen des Kraftstoffdrucks können durch hybridfahrzeugspezifische Grenzen oder Betriebsbedingungen induziert werden.

Das Modell 104 beinhaltet bei diesem Aspekt
i. einen Teil, der dazu eingerichtet ist, eine Fahrzeugradleistung in Abhängigkeit von der Fahrzeuggeschwindigkeit, der Steigung, der Fahrzeugmasse und/oder des Widerstandskoeffizienten zu berechnen. Die Fahrzeuggeschwindigkeit, die Steigung, die Fahrzeugmasse und der Widerstandskoeffizient sind Eingangsgrößen gemäß diesem Beispiel. Die Fahrzeugradleistung wird beispielsweise auf Basis einer Fahrwiderstandsgleichung aus einem Beschleunigungswiderstand, einem Luftwiderstand, einem Rollwiderstand und/oder einem Steigungswiderstand als Eingangsgrößen gemäß diesem Beispiel bestimmt.
ii. einen Teil, der dazu eingerichtet ist, basierend auf der berechneten Radleistung und ihrer zeitlichen Abfolge zu bestimmen, ob der Verbrennungsmotor oder der Elektromotor zum Antrieb genutzt wird.
iii. einen Teil, der dazu eingerichtet ist, Druckänderungen in dem Einspritzsystem basierend auf der Fahrzeugradleistung und der zeitlichen Abfolge zu berechnen.

In dem Beispiel werden gewünschte Druckänderungen, die durch das Druckregelsystem erzeugt werden, und unerwünschte Druckänderungen bestimmt.

Unerwünschte Druckänderungen werden beispielsweise durch thermische Effekte während elektrischer Fahrzeiträume, d.h. bei ausgeschaltetem Verbrennungsmotor, erzeugt. Thermisch induzierte Druckänderungen sind eine Folge der Wärmeausdehnung von Kraftstoff in dem in sich geschlossenen Einspritzsystem aufgrund von Wärmeausgleichseffekten zwischen kaltem Kraftstoff und heißen Motorteilen in Zeiträumen mit ausgeschaltetem Verbrennungsmotor.

Unerwünschte Druckänderungen entstehen beispielsweise durch hydraulische Leckagen, z.B. in Behältern, in Zeiträumen mit ausgeschaltetem Verbrennungsmotor.

In dem Beispiel werden die vorstehend genannten Druckänderungen, die gleichzeitig auftreten können, kombiniert.

Der Analysator 106 beinhaltet das Schädigungsmodell.

Das Schädigungsmodell ist dazu eingerichtet, eine Rainflow-Zählung des Drucks mit einer vorgegebenen Auflösung auszuführen und die Schädigungsakkumulation auf Basis einer Wöhlerkurve zu berechnen.

Die Ausgabe des Schädigungsmodells ist die Ausgangsgröße, welche die Schädigungsakkumulation repräsentiert.

## Patentansprüche

1. Computerimplementiertes Verfahren zum Testen einer Maschine mit einer Mehrzahl von Komponenten oder zum Testen einer Komponente einer Maschine, umfassend das Bereitstellen (202) einer Menge von Eingangsgrößen für ein Modell, wobei die Menge von Eingangsgrößen Belastungsfaktoren an der Maschine kennzeichnet oder Belastungsfaktoren an mindestens einer Komponente der Maschine kennzeichnet, das Auswählen (204) einer Teilmenge der Menge, das Mappen (206) - durch das Modell - der Teilmenge auf eine Ausgangsgröße des Modells, die eine Beanspruchung, welche die Belastungsfaktoren bei mindestens einer Komponente der Maschine verursachen, **kennzeichnet, dadurch** gekennzeichnet, dass das Auswählen (204) der Teilmenge das Auswählen einer Eingangsgröße, die eine Route definiert, und das Auswählen einer Eingangsgröße, die ein Fahrerprofil definiert, beinhaltet, und wobei die Eingangsgröße, welche die Route definiert, aus einer Mehrzahl von Eingangsgrößen, die unterschiedliche Routen definieren, ausgewählt wird (204), wobei die Eingangsgröße, welche das Fahrerprofil definiert, aus einer Mehrzahl von Eingangsgrößen, die unterschiedliche Fahrerprofile definieren, ausgewählt wird (204), wobei vorzugsweise ein Bestimmen (208) eines Schädigungsgrades, insbesondere eines Ermüdungsgrades, der mindestens einen Komponente in Abhängigkeit von einer Menge von Ausgangsgrößen, welche die Ausgangsgröße beinhaltet, erfolgt.

2. Verfahren nach einem der vorhergehenden Ansprüche, **dadurch gekennzeichnet, dass** eine Mehrzahl von unterschiedlichen Teilmengen ausgewählt (204) und gemappt (206) wird, wobei eine Verteilung der Beanspruchung oder Ermüdung aus den Ausgangsgrößen, die aus dem Mappen der unterschiedlichen Teilmengen resultieren, bestimmt wird (208).

3. Verfahren nach einem der vorhergehenden Ansprüche, **dadurch gekennzeichnet, dass** das Verfahren, insbesondere das Bestimmen (208) des Schädigungsgrades, das Addieren oder Multiplizieren ausgewählter Ausgangsgrößen in der Menge der Ausgangsgrößen beinhaltet.

4. Verfahren nach Anspruch 3, **dadurch gekennzeichnet, dass** das Verfahren, insbesondere das Bestimmen (208) des Schädigungsgrades, das Bestimmen einer Häufigkeit des Auftretens einer Eigenschaft der Route, insbesondere einer Tageszeit, einer Startzeit, einer Region, einer Dauer, einer Entfernung oder eines Typs, entweder in einer maschinenspezifischen Statistik oder in einem maschinenspezifischen Journal, und das Bestimmen einer Gewichtung für die Ausgangsgröße in Abhängigkeit von der Häufigkeit und das Addieren oder Multiplizieren der mit der Gewichtung gewichteten Ausgangsgröße beinhaltet.

5. Verfahren nach Anspruch 4, **dadurch gekennzeichnet, dass** das Verfahren, insbesondere das Bestimmen (208) des Schädigungsgrades, das Auswählen eines Bedieners, insbesondere eines Fahrers oder Benutzers der Maschine in der maschinenspezifischen Statistik oder dem maschinenspezifischen Journal, das Bestimmen einer Mehrzahl von Ausgangsgrößen in der Menge der Ausgangsgrößen für den Bediener, und vorzugsweise das Bestimmen des Schädigungsgrades mit der Mehrzahl von Ausgangsgrößen beinhaltet.

6. Verfahren nachAnspruch 4 oder 5, **dadurch gekennzeichnet, dass** das Verfahren, insbesondere das Bestimmen (208) des Schädigungsgrades, das Auswählen der maschinenspezifischen Statistik aus einer Menge von maschinenspezifischen Statistiken beinhaltet.

7. Verfahren nach einem der vorhergehenden Ansprüche, **dadurch gekennzeichnet, dass** die Komponente der Maschine eine Brennstoffzellenkomponente, ein Wechselrichter für eine elektrische Maschine, eine Batterie oder ein Getriebe, insbesondere für ein Elektrofahrzeug, ein Kraftstoffeinspritzsystem, insbesondere für ein Hybridfahrzeug, ist.

8. Verfahren nach einem der vorhergehenden Ansprüche, **dadurch gekennzeichnet, dass** die Maschine ein Fahrzeug, ein Motorrad oder ein Elektrofahrrad, ein Zug oder ein Flugzeug, oder ein Schiff ist.

9. Vorrichtung (100) zum Testen einer Maschine mit einer Mehrzahl von Komponenten oder zum Testen einer Komponente einer Maschine, umfassend eine Datenbank (102), ein Modell (104) und einen Analysator (106), **dadurch gekennzeichnet, dass** die Vorrichtung dazu eingerichtet ist, die Schritte des Verfahrens nach einem der Ansprüche 1 bis 8 auszuführen.

10. Computerprogramm, **dadurch gekennzeichnet, dass** das Computerprogramm Anweisungen beinhaltet, die bei Ausführung durch einen Computer bewirken, dass der Computer Schritte des Verfahrens nach einem der Ansprüche 1 bis 8 durchführt.

## Claims

1. Computer-implemented method for testing a machine having a plurality of components or for testing a component of a machine, comprising providing (202) a set of input variables for a model, wherein the set of input variables characterizes load factors on the machine or characterizes load factors on at least one component of the machine, selecting (204) a subset of the set, mapping (206) - by way of the model - the subset to an output variable of the model that characterizes a stress caused by the load factors in at least one component of the machine, **characterized in that** the selection (204) of the subset involves selecting an input variable that defines a route and selecting an input variable that defines a driver profile, and wherein the input variable that defines the route is selected (204) from a plurality of input variables that define different routes, wherein the input variable that defines the driver profile is selected (204) from a plurality of input variables that define different driver profiles, wherein preferably a degree of damage, in particular a degree of fatigue, of the at least one component is determined (208) on the basis of a set of output variables comprising the output variable.

2. Method according to one of the preceding claims, **characterized in that** a plurality of different subsets are selected (204) and mapped (206), wherein a distribution of the stress or fatigue is determined (208) from the output variables resulting from the mapping of the different subsets.

3. Method according to one of the preceding claims, **characterized in that** the method, in particular the determination (208) of the degree of damage, involves adding or multiplying selected output variables in the set of output variables.

4. Method according to Claim 3, **characterized in that** the method, in particular the determination (208) of the degree of damage, involves determining a frequency of the occurrence of a property of the route, in particular a time of day, a start time, a region, a duration, a distance or a type, either in machine-specific statistics or in a machine-specific journal, and involves determining a weighting for the output variable on the basis of the frequency and adding or multiplying the output variable weighted by the weighting.

5. Method according to Claim 4, **characterized in that** the method, in particular the determination (208) of the degree of damage, involves selecting an operator, in particular a driver or user, of the machine in the machine-specific statistics or the machine-specific journal, determining a plurality of output variables in the set of output variables for the operator, and preferably determining the degree of damage using the plurality of output variables.

6. Method according to Claim 4 or 5, **characterized in that** the method, in particular the determination (208) of the degree of damage, involves selecting the machine-specific statistics from a set of machine-specific statistics.

7. Method according to one of the preceding claims, **characterized in that** the component of the machine is a fuel cell component, an inverter for an electric machine, a battery or a transmission, in particular for an electric vehicle, a fuel injection system, in particular for a hybrid vehicle.

8. Method according to one of the preceding claims, **characterized in that** the machine is a vehicle, a motorcycle or an electric bicycle, a train or an aircraft, or a ship.

9. Device (100) for testing a machine having a plurality of components or for testing a component of a machine, comprising a database (102), a model (104) and an analyser (106), **characterized in that** the device is configured to carry out the steps of the method according to one of Claims 1 to 8.

10. Computer program, **characterized in that** the computer program contains instructions which, when executed by a computer, cause the computer to perform steps of the method according to one of Claims 1 to 8.

## Revendications

1. Procédé mis en œuvre par ordinateur permettant de tester une machine comportant une pluralité de composants ou de tester un composant d'une machine, comprenant la fourniture (202) d'un ensemble de variables d'entrée à un modèle, l'ensemble de variables d'entrée caractérisant des facteurs de charge sur la machine ou caractérisant des facteurs de charge sur au moins un composant de la machine, la sélection (204) d'un sous-ensemble de l'ensemble, le mappage (206) - par le modèle - du sous-ensemble sur une variable de sortie du modèle qui caractérise une contrainte provoquée par les facteurs de charge dans le cas d'au moins un composant de la machine, **caractérisé en ce que** la sélection (204) du sous-ensemble comprend la sélection d'une variable d'entrée qui définit un itinéraire et la sélection d'une variable d'entrée qui définit un profil du conducteur, et dans lequel la variable d'entrée qui définit l'itinéraire est sélectionnée (204) parmi une pluralité de variables d'entrée qui définissent différents itinéraires, la variable d'entrée qui définit le profil du conducteur étant sélectionnée (204) parmi une pluralité de variables d'entrée qui définissent différents profils du conducteur, une détermination (208) d'un degré de détérioration, en particulier d'un degré de fatigue, d'au moins un composant étant effectuée de préférence en fonction d'un ensemble de variables de sortie qui comprennent la variable de sortie.

2. Procédé selon l'une quelconque des revendications précédentes, **caractérisé en ce que** plusieurs sous-ensembles différents sont sélectionnés (204) et mappés (206), une répartition de la contrainte ou de la fatigue étant déterminée (208) à partir des variables de sortie résultant du mappage des différents sous-ensembles.

3. Procédé selon l'une quelconque des revendications précédentes, **caractérisé en ce que** le procédé, en particulier la détermination (208) du degré de détérioration, comprend l'addition ou la multiplication de variables de sortie sélectionnées dans l'ensemble de variables de sortie.

4. Procédé selon la revendication 3, **caractérisé en ce que** le procédé, en particulier la détermination (208) du degré de détérioration, comprend la détermination d'une fréquence d'apparition d'une propriété de l'itinéraire, en particulier d'une heure du jour, d'une heure de début, d'une région, d'une durée, d'une distance ou d'un type, soit dans des statistiques spécifiques à la machine, soit dans un journal spécifique à la machine, et la détermination d'un poids pour la variable de sortie en fonction de la fréquence, et l'addition ou la multiplication de la variable de sortie pondérée par le poids.

5. Procédé selon la revendication 4, **caractérisé en ce que** le procédé, en particulier la détermination (208) du degré de détérioration, comprend la sélection d'un opérateur, en particulier d'un conducteur ou d'un utilisateur de la machine dans les statistiques spécifiques à la machine ou dans le journal spécifique à la machine, la détermination d'une pluralité de variables de sortie dans l'ensemble de variables de sortie pour l'opérateur, et de préférence, la détermination du degré de détérioration à l'aide de la pluralité de variables de sortie.

6. Procédé selon la revendication 4 ou 5, **caractérisé en ce que** le procédé, en particulier la détermination (208) du degré de détérioration, comprend la sélection des statistiques spécifiques à la machine à partir d'un ensemble de statistiques spécifiques à la machine.

7. Procédé selon l'une quelconque des revendications précédentes, **caractérisé en ce que** le composant de la machine est un composant de pile à combustible, un onduleur pour machine électrique, une batterie ou une boîte de vitesses, en particulier pour véhicule électrique, un système d'injection de carburant, en particulier pour véhicule hybride.

8. Procédé selon l'une quelconque des revendications précédentes, **caractérisé en ce que** la machine est un véhicule, une motocyclette ou une bicyclette électrique, un train ou un aéronef ou un bateau.

9. Appareil (100) permettant de tester une machine comportant une pluralité de composants ou de tester un composant d'une machine, comprenant une base de données (102), un modèle (104) et un analyseur (106), **caractérisé en ce que** le dispositif est conçu pour exécuter les étapes du procédé selon l'une quelconque des revendications 1 à 8.

10. Programme informatique, **caractérisé en ce que** le programme informatique contient des instructions qui, lorsqu'elles sont exécutées par un ordinateur, amènent l'ordinateur à exécuter des étapes du procédé selon l'une quelconque des revendications 1 à 8.
